Europäisches Patentamt

European Patent Office

Office européen des brevets

(11) Veröffentlichungsnummer: **0 249 807 B1**

# (12) EUROPÄISCHE PATENTSCHRIFT

(45) Veröffentlichungstag der Patentschrift: **14.10.92**

(21) Anmeldenummer: **87108033.9**

(22) Anmeldetag: **03.06.87**

Teilanmeldung 91106253.7 eingereicht am 03/06/87.

(51) Int. Cl.⁵: **H02K 7/116**, B60K 1/02

(54) **Kraftfahrzeug-Elektroantrieb.**

(30) Priorität: **18.06.86 DE 3620337**

(43) Veröffentlichungstag der Anmeldung:
**23.12.87 Patentblatt 87/52**

(45) Bekanntmachung des Hinweises auf die Patenterteilung:
**14.10.92 Patentblatt 92/42**

(84) Benannte Vertragsstaaten:
**AT BE CH DE ES FR GB GR IT LI LU NL SE**

(56) Entgegenhaltungen:
**CH-A- 180 558          CH-A- 238 772**
**CH-A- 405 485          DE-A- 1 430 322**
**FR-A- 714 666          FR-A- 2 176 010**
**US-A- 1 661 780**

(73) Patentinhaber: **Magnet-Motor Gesellschaft für magnetmotorische Technik mbH**
**Moosstrasse 14**
**W-8130 Starnberg(DE)**

(72) Erfinder: **Heidelberg, Götz, Dipl.-Phys.**
**Am Hügel 16**
**W-88136 Percha(DE)**

(74) Vertreter: **Klunker . Schmitt-Nilson . Hirsch**
**Winzererstrasse 106**
**W-8000 München 40(DE)**

## Beschreibung

Die Erfindung bezieht sich auf einen Kraftfahrzeug-Elektroantrieb.

Elektrische Kraftfahrzeug-Antriebe sind an sich seit langer Zeit bekannt, ohne daß sich jedoch bislang eine größere praktische Verbreitung ergeben hätte.

Der Erfindung liegt die Aufgabe zugrunde, eine praxisnahe, kompakte Konfiguration für Kraftfahrzeug-Elektroantriebe verfügbar zu machen.

In Lösung dieser Aufgabe ist Gegenstand der Erfindung ein Kraftfahrzeug-Elektroantrieb mit folgenden Merkmalen:

(a) mindestens ein Elektromotor und mindestens ein Getriebe sind zu einer Baueinheit zusammengefaßt, bei der der Rotor des Elektromotors mittels der gelagerten Eingangswelle des Getriebes fliegend gelagert ist;

(b) der Elektromotor weist einen Außenrotor auf und ist elektronisch kommutiert und/oder in Synchronbauart ausgeführt;

(c) die Baueinheit hat eine Konfiguration mit einem Winkelraum zwischen dem Gehäuseumfang des Elektromotors und einem darüber hinausragenden Bereich des Getriebes, wobei in diesem Winkelraum eine Kraftfahrzeugrad-Antriebswelle an die Ausgangswelle des Getriebes angeschlossen ist.

Eine Antriebs-Baueinheit aus einem Elektromotor und einem Getriebe, bei der der Rotor des Elektromotors mittels der gelagerten Eingangswelle des Getriebes fliegend gelagert ist, ist aus dem Dokument CH-A-405 485 bekannt. Hierbei handelt es sich allerdings nicht um den Antrieb eines Kraftfahrzeugs.

Elektromotoren mit Außenrotor und in Synchronbauart sind aus dem Dokument FR-A-2 176 010 bekannt. Elektronisch kommutierte Elektromotoren sind ebenfalls an sich bekannt.

Aus dem Dokument DE-A-1 430 322 ist ein Kraftfahrzeug-Elektroantrieb bekannt, bei dem zwei Elektromotoren an ein quer zur Axialrichtung längeres Getriebe angeflanscht sind und der Antrieb zweiseitig von dem über die Elektromotoren hinausragenden Bereich des Getriebes aus erfolgt.

Die bei dem erfindungsgemäßen Kraftfahrzeug-Elektroantrieb vorhandene Elektromotor-Getriebe-Baueinheit ist kompakt sowie von der Einbaubarkeit und vom Herstellungsaufwand her günstig. Der Antriebswellen-Anschluß in dem Winkelraum ist platzsparend. Das Getriebe kann eine ovale Gestalt haben. Die Bauweise des Elektromotors mit Außenrotor führt zu konstruktiv besonders günstigen und kompakten Verhältnissen. Elektronisch kommutierte und/oder in Synchronbauart ausgeführte Elektromotoren sind besonders gut regelbar, wenig störungsanfällig und lassen sich mit hoher Drehmomentdichte ausführen.

Speziellere Ausgestaltungen der Erfindung sind Gegenstand der abhängigen Patentansprüche.

Es ist bevorzugt, einen ersten Elektromotor mit einem zugeordneten ersten Getriebe und einen zweiten Elektromotor mit einem zugeordneten zweiten Getriebe zu einer Gesamt-Baueinheit zusammenzufassen, insbesondere für den Antrieb der beiden Räder einer Kraftfahrzeugachse. Diese Gesamt-Baueinheit kann insgesamt im Fahrzeug befestigt werden. Besonders günstig gestaltet sich diese Zusammenfassung, wenn man das erste und das zweite Getriebe aneinander befestigt.

Die geschilderte Möglichkeit der Zusammenfassung von zwei Teil-Baueinheiten läßt sich, wie bevorzugt, auch günstig dafür nutzen, je nach den räumlichen Erfordernissen wahlweise entweder die Gesamt-Baueinheit oder räumlich voneinander getrennt die Teil-Baueinheiten in das Kraftfahrzeug einzubauen. Bei Trennung in zwei Teil-Baueinheiten werden die beiden Getriebe normalerweise jeweils mit einem Deckel abgeschlossen.

Das Getriebe ist in der Regel ein Untersetzungsgetriebe. In den meisten Fällen finden einstufige Getriebe Verwendung. Prinzipiell kommen alle bekannten Getriebekonstruktionen in Betracht, wobei jedoch Stirnradgetriebe und Zahnkettengetriebe angesichts der räumlichen Verhältnisse in Kraftfahrzeugen häufig besonders günstig sind, wie die Ausführungsbeispiele noch deutlicher machen werden.

Die erfindungsgemäße Baueinheit aus Elektromotor und Getriebe hat quer zu den Achsen von Elektromotor-Rotor, Eingangswelle und Ausgangswelle des Getriebes gemessen eine günstig große Erstreckung, so daß Halterungspunkte zur Drehmomentabstützung mit günstig großem Abstand entstehen.

Die Erfindung und Ausgestaltungen der Erfindung werden im folgenden anhand eines schematisiert dargestellten Ausführungsbeispiels noch näher erläutert. Es zeigt:

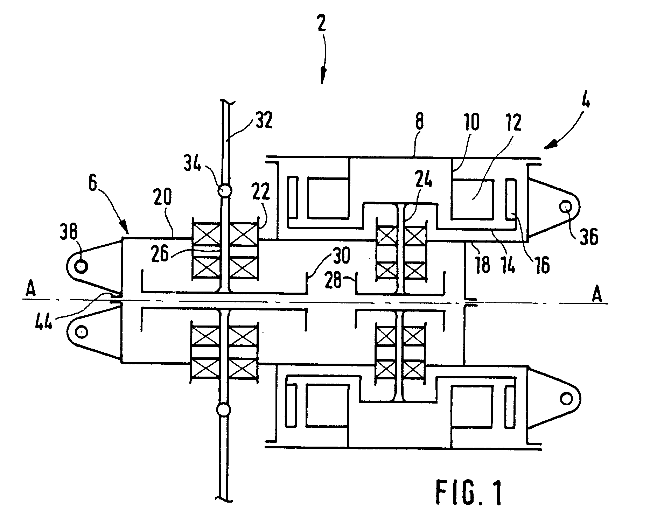

Fig. 1 eine Gesamt-Baueinheit aus zwei Elektromotoren und zwei Getrieben im Schnitt.

Die Baueinheit 2 gemäß Fig. 1 ist zu der Ebene A-A symmetrisch, so daß nur eine Hälfte beschrieben werden muß. Man erkennt bei jeder Teil-Baueinheit einen Elektromotor 4 und ein Getriebe 6. Der Elektromotor 4 ist im wesentlichen zylindrisch mit im Vergleich zum Durchmesser deutlich geringerer, axialer Dicke. Außenseitig der Baueinheit 2 weist der Elektromotor eine runde Grundplatte 8 auf, von der ein hohlzylindrischer Fortsatz 10 axial zum Motorinneren ragt. Am Außenumfang des Fortsatzes 10 sind insgesamt im wesentlichen zylindrisch die Statorpole 12 befestigt. Der Rotor 14 des Elektromotors 4 ist im wesentlichen zylindrisch-topfförmig und umgreift mit seiner Umfangswand die Statorpole 12 außen. Innen an der Umfangswand sind ringförmig Dauermagnete 16 in abwechselnder Polung befestigt. Die Stirnwand des Rotors 14 liegt auf der der Grundplatte 8 entgegengesetzten Seite des Elektromotors 4 und ist in einem zentralen Bereich in den Innenraum innerhalb der Statoren 12 hinein zurückgesetzt. Der Rotor 14 ist von einem topfförmigen Gehäuse 18 umschlossen, das mit der Grundplatte 8 verbunden ist.

An der der Grundplatte 8 entgegengesetzten Axialseite des Elektromotors 4 schließt sich das Getriebe 6 an. Das Getriebe 6 hat insgesamt eine "scheibenartige" Gestalt mit zwei parallelen Begrenzungswänden quer zu der Erstreckung der Wellen des Getriebes. Die dem Elektromotor zugewandte Begrenzungswand 20 ist an den Durchführungsstellen der Getriebewellen jeweils mit einem hohlzylindrischen Stutzen 22 versehen, der sich ein kürzeres Stück aus dem Getriebe 6 heraus erstreckt und ein längeres Stück in das Getriebe hinein erstreckt. In diesen Stutzen 22 sind eine Eingangswelle 24 und eine Ausgangswelle 26 des Getriebes gelagert. Jeweils am inneren Ende trägt sowohl die Eingangswelle 24 als auch die Ausgangswelle 26 jeweils ein Zahnrad 28 bzw. 30, wobei das Zahnrad 30 auf der Ausgangswelle 26 einen größeren Durchmesser hat. Dabei kann es sich entweder um herkömmliche, miteinander kämmende Stirnräder handeln oder, wie gezeichnet, um Zahnräder, die mit einer um die beiden Zahnräder 28, 30 herumgelegten, nicht gezeichneten Zahnkette ein Getriebe bilden. Die Eingangswelle des Getriebes 6 ist zum Elektromotor 4 hin aus dem Getriebegehäuse herausgeführt, und dort ist der zentrale, zurückgesetzte Bereich des Rotors 14 befestigt, so daß sich eine fliegende Lagerung des Rotors 14 auf der Eingangswelle 24 des Getriebes 6 ergibt. Im Überlappungsbereich des Elektromotors 4 und des Getriebes 6 fallen die Gehäuse dieser beiden Bauteile zusammen.

Auf der dem Elektromotor 4 abgewandten Seite des Getriebes 6 ist dessen Gehäuse 20 offen. Dort ist die ganz entsprechend ausgebildete, zweite Teil-Baueinheit mittels einer Flanschverbindung 44 befestigt.

In dem Bereich, wo das Getriebe über das zylindrische Gehäuse 18 des Elektromotors 4 vorragt, ist ein Winkelraum gebildet, in dem eine Gelenkwelle 32, die zu einem anzutreibenden Kraftfahrzeugrad führt, mittels eines Gelenks 34 an die Ausgangswelle 26 angeschlossen ist. Dies gilt für beide Teil-Baueinheiten.

An der in Fig. 1 rechten Seite des Motorgehäuses 18 ist ein Befestigungsauge 36 vorgesehen. An der in Fig.1 linken Seite des Getriebegehäuses 20 ist ebenfalls ein Befestigungsauge 38 vorgesehen.

Somit ergeben sich zwei Befestigungsaugen 36, 38 mit optimal großem Abstand. Insgesamt hat somit die Gesamt-Baueinheit 2 vier Befestigungsaugen.

Die Baueinheit 2 ist insgesamt so im Fahrzeug befestigt, daß die Achsen des Rotors 14, der Eingangswelle 24 und der Ausgangswelle 26 quer zur Fahrtrichtung des Kraftfahrzeugs liegen. Da die beiden Getriebe 6 in Axialrichtung nur wenig Raum beanspruchen, ergeben sich zwei Gelenkwellen 32 jeweils mit erwünscht großer Länge.

Wenn man die beiden Getriebe 6 an der Flanschverbindung trennt und die beiden dann offenen Getriebeseiten mit Deckeln verschließt, kann man auch jede Teil-Baueinheit räumlich getrennt für sich in das Kraftfahrzeug einbauen. Ein typisches Beispiel hierfür ist ein Kraftfahrzeug mit Frontantrieb, bei dem man die beiden Teil-Baueinheiten axial soweit auseinander rückt, daß ein vorn im Kraftfahrzeug angeordneter Verbrennungsmotor dazwischen Platz hat. Der Verbrennungsmotor dient dem Antrieb eines angeschlossenen Generators, der den für die Elektromotoren 4 erforderlichen Strom im Kraftfahrzeug erzeugt.

Es ist ferner hervorzuheben, daß das Innere des jeweiligen Elektromotors 4 durch Lösen der Grundplatte 8, die ja auf der dem zugeordneten Getriebe 6 entgegengesetzten Axialseite liegt, bequem zugänglich ist, beispielsweise für Wartungs- oder Reparaturarbeiten.

**Patentansprüche**

1.  Kraftfahrzeug-Elektroantrieb mit folgenden Merkmalen:

    a) mindestens ein Elektromotor (4) und mindestens ein Getriebe (6) sind zu einer Baueinheit (2) zusammengefaßt, bei der der Rotor (14) des Elektromotors (4) mittels der gelagerten Eingangswelle (24) des Getriebes (6) fliegend gelagert ist;
    b) der Elektromotor (4) weist einen Außenrotor (14) auf und ist elektronisch kommutiert und/oder in Synchronbauart ausgeführt;
    c) die Baueinheit (2) hat eine Konfiguration mit einem Winkelraum zwischen dem Gehäuseumfang des Elektromotors (4) und einem darüber hinausragenden Bereich des Getriebes (6), wobei in diesem Winkelraum eine Kraftfahrzeugrad-Antriebswelle (32) an die Ausgangswelle (26) des Getriebes (6) angeschlossen ist.

2.  Kraftfahrzeug-Elektroantrieb nach Anspruch 1, dadurch gekennzeichnet, daß die Kraftfahrzeugrad-Antriebswelle (32) eine mittels eines Gelenks (34) an die Ausgangswelle (26) des Getriebes (6) angeschlossene Gelenkwelle ist.

**3.** Kraftfahrzeug-Elektroantrieb nach Anspruch 1 oder 2,
dadurch gekennzeichnet, daß daß Getriebe (6) eine insgesamt scheibenartige Gestalt hat.

**4.** Kraftfahrzeug-Elektroantrieb nach einem der Ansprüche 1 bis 3,
dadurch gekennzeichnet, daß die axiale Dicke des Elektromotors (4) kleiner als sein Durchmesser ist.

**5.** Kraftfahrzeug-Elektroantrieb nach einem der Ansprüche 1 bis 4,
dadurch gekennzeichnet, daß die Stirnwand des Rotors (14) des Elektromotors (4) in einem zentralen Bereich in den Motorinnenraum hinein zurückgesetzt ist.

**6.** Kraftfahrzeug-Elektroantrieb nach einem der Ansprüche 1 bis 5,
dadurch gekennzeichnet, daß der Rotor (14) am Innenumfang mit Dauermagneten (16) besetzt ist.

**7.** Kraftfahrzeug-Elektroantrieb nach einem der Ansprüche 1 bis 6,
dadurch gekennzeichnet, daß eine zu einer Mittelebene (A-A) symmetrische Baueinheit (2) aus zwei Getrieben (6) und zwei Elektromotoren (4) vorgesehen ist.

**Claims**

**1.** An electric drive for motor vehicles, having the following features:
a) at least one electric motor (4) and at least one transmission (6) are combined to form a constructional unit (2) in which the rotor (14) of the electric motor (4) is supported in cantilever fashion by means of the supported input shaft (24) of the transmission (6);
b) the electric motor (4) has an external rotor (14) and is designed for electronic commutation and/or in synchronous construction;
c) the constructional unit (2) has a configuration with an angular space between the casing circumference of the electric motor (4) and a portion of the transmission (6) projecting therebeyond, with a motor vehicle wheel driving shaft (32) being connected in this angular space to the output shaft (26) of the transmission (6).

**2.** An electric drive for motor vehicles according to claim 1,
characterized in that the motor vehicle wheel driving shaft (32) is an articulated shaft connected by means of a joint (34) to the output shaft (26) of the transmission (6).

**3.** An electric drive for motor vehicles according to claim 1 or 2,
characterized in that the transmission (6) has an in total disc-like configuration.

**4.** An electric drive for motor vehicles according to any one of claims 1 to 3,
characterized in that the axial thickness of the electric motor (4) is smaller than the diameter thereof.

**5.** An electric drive for motor vehicles according to any one of claims 1 to 4,
characterized in that the face wall of the rotor (14) of the electric motor (4) is set back in a central portion into the motor interior.

**6.** An electric drive for motor vehicles according to any one of claims 1 to 5,
characterized in that the rotor (14) carries permanent magnets (16) on the inner circumference.

**7.** An electric drive for motor vehicles according to any one of claims 1 to 6,
characterized in that a constructional unit (2) consisting of two transmissions (6) and two electric motors (4) is provided which is symmetrical to a central plane (A-A).

**Revendications**

**1.** Ensemble d'entraînement électrique pour véhicules automobiles, présentant les caractéristiques suivantes:
a) au moins un moteur électrique (4) et au moins une transmission (6) sont réunis en une unité modulaire (2) dans laquelle le rotor (14) du moteur électrique (4) est monté flottant au moyen de l'arbre d'entrée (24) de la transmission (6) porté par des paliers ;
b) le moteur électrique (4) comporte un rotor extérieur (14) et est commuté électroniquement et/ou de type synchrone :
c) l'unité modulaire (2) a une configuration comportant un espace angulaire entre la périphérie du carter du moteur électrique (4) et une zone de la transmission (6) qui en dépasse, un arbre d'entraînement de roues de véhicule automobile (32) étant, dans cet espace angulaire, raccordé à l'arbre de sortie (26) de la transmission (6).

**2.** Ensemble d'entraînement selon la revendication 1, caractérisé en ce que l'arbre d'entraînement de roues (32) est un arbre de transmission raccordé au moyen d'une articulation (34), à l'arbre de sortie (26) de la transmission (6).

3. Ensemble d'entraînement selon la revendication 1 ou 2, caractérisé en ce que la transmission (6) a une configuration globale discoïde.

4. Ensemble d'entraînement selon l'une des revendications 1 à 3, caractérisé en ce que l'épaisseur axiale du moteur électrique (4) est inférieure à son diamètre.

5. Ensemble d'entraînement selon l'une des revendications 1 à 4, caractérisé en ce que la paroi frontale du rotor (14) du moteur électrique (4) est reculée à l'intérieur du moteur dans un zone centrale.

6. Ensemble d'entraînement selon l'une des revendications 1 à 5, caractérisé en ce que le rotor (14) comporte des aimants permanents (16) à la périphérie intérieure.

7. Ensemble d'entraînement selon l'une des revendications 1 à 6, caractérisé en ce qu'une unité modulaire (2) symétrique par rapport à un plan médian (A-A), comprenant deux transmissions (6) et deux moteurs électriques (4), est prévue.

FIG. 1